# FASCICULE DE BREVET EUROPEEN

(11) **EP 4 558 769 B1**
(45) Date de publication et mention de la délivrance du brevet: **02.09.2026**
(21) Numéro de dépôt: 23764358.0
(22) Date de dépôt: 17.07.2023
(51) Int. Cl.: F27D 5/00, F27B 5/06, C04B 35/565, C04B 35/64, C04B 35/80, C04B 35/638

(54) **OUTILLAGE DE MAINTIEN POUR LE FRITTAGE DE PREFORMES**
HALTEWERKZEUG ZUM VORFORMSINTERN
HOLDING TOOL FOR PREFORM SINTERING

(30) Priorité: 22.07.2022 FR 2207570
(43) Date de publication de la demande: 28.05.2025
(73) Titulaire: Safran Ceramics, 33185 Le Haillan (FR)
(72) Inventeur: GOUJARD, Stéphane, Roger, André, 77550 MOISSY-CRAMAYEL (FR); MATHOUX-HEULS, Lucas, 77550 MOISSY-CRAMAYEL (FR); TESSON, Thierry, Guy, Xavier, 77550 MOISSY-CRAMAYEL (FR); AUPETIT, Christophe, Paul, 77550 MOISSY-CRAMAYEL (FR); LESIZZA, Emilie, 77550 MOISSY-CRAMAYEL (FR)
(74) Mandataire: Cabinet Beau de Loménie
(86) Numéro de dépôt international: PCT/FR2023/051096
(87) Numéro de publication internationale: WO 2024/018143

(56) Documents cités:
- CN-A- 105 546 997
- CN-A- 107 764 069
- CN-A- 111 072 379
- US-A- 2 975 499

## Description

### Domaine Technique

La présente invention concerne la réalisation de pièces de révolution en matériau composite notamment de type oxyde/oxyde et, plus particulièrement, le maintien des préformes fibreuses destinées à former de telles pièces lors des traitements haute température mis en œuvre notamment durant des étapes de déliantage ou de frittage. En particulier, la présente invention concerne la réalisation de pièces destinées à constituer tout ou partie de pièces d'arrière-corps de moteur aéronautique civil tels que des cônes d'échappement.

### Technique antérieure

Pour la fabrication de pièces en matériau composite, en particulier de type oxyde/oxyde, il est connu de réaliser une préforme fibreuse, de l'imprégner avec un ou plusieurs précurseurs de matrice puis de réaliser une opération de frittage pour densifier ladite préforme fibreuse. L'imprégnation de la préforme fibreuse peut être réalisée de manière bien connue en disposant la préforme fibreuse dans un moule et en injectant une barbotine comprenant une phase liquide chargée de particules de précurseur de matrice dans ladite préforme. Un filtre disposé dans le moule permet d'évacuer la phase liquide de la barbotine tout en retenant les particules de précurseur de matrice dans la préforme. Un tel procédé est notamment décrit dans les documents US2017334791A1 et US2021046671A1. Puis, on fritte les particules de précurseur de matrice présentes dans la préforme fibreuse afin de former la matrice dans les porosités de ladite préforme.

Un liant organique, par exemple du PVA, peut être ajouté dans la phase liquide de la barbotine afin d'assurer la tenue de la préforme imprégnée après séchage et avant frittage.

Toutefois, on constate que les préformes ainsi imprégnées peuvent se déformer pendant les traitements à haute température nécessaires aux opérations de déliantage ou de frittage. En effet, comme les particules de précurseur de matrice ne sont pas liées à l'intérieur de la préforme et que la matrice n'est pas encore formée, la préforme imprégnée a une tenue très réduite et peut notamment s'ovaliser. Le risque de déformation est encore plus marqué dans le cas de pièces présentant une épaisseur très fine et/ou une forme élancée.

Pour remédier à ces déformations non souhaitées, il a été envisagé d'intégrer des raidisseurs aux pièces, ou d'épaissir les parties des pièces les plus exposées au risque de déformation. Toutefois, ces méthodes présentent de nombreux inconvénients, et engendrent notamment une augmentation non souhaitable de la masse des pièces.

Le document CN 105 546 997 A décrit un dispositif de support pour le frittage. Le document CN 111 072 379 A décrit une méthode de frittage pour une pièce tubulaire. Le document US 2 975 499 A décrit une méthode de traitement thermique dans un four à tunnel.

### Exposé de l'invention

Afin de remédier aux inconvénients précités, l'invention propose une installation de frittage de préforme de révolution comprenant un four de frittage dans lequel est disposé un chargement, l'installation étant caractérisée en ce que le chargement comprend une préforme de révolution disposée autour d'au moins un outillage de maintien, le ou les outillages de maintien comprenant un disque et une couronne présente sur la périphérie du disque, la couronne étant réalisée en matériau compressible apte à être éliminé par oxydation thermique, une partie de la préforme étant en contact avec la couronne avant frittage.

Une telle installation garantit un maintien de la forme de la préforme fibreuse durant les étapes de frittage et éventuellement de déliantage, sans nécessiter une augmentation de la masse de la pièce finale obtenue. La présence d'une couche de matériau compressible entre le disque et la préforme permet de compenser les dilatations thermiques radiales entre ledit disque et ladite préforme, pour assurer le contact entre l'outillage de maintien et la préforme lorsque celle-ci n'est pas autoporteuse ou lorsque celle-ci a une tenue réduite, en particulier avant le début du frittage.

Par « matériau apte à être éliminé par oxydation thermique », on décrit ici un matériau dont la majorité du volume se décompose par oxydation lorsqu'il est exposé à de fortes températures. Ainsi, la couronne réalisée dans un tel matériau est apte à maintenir la préforme fibreuse lors d'une éventuelle opération de déliantage et de préférence jusqu'au début du frittage, puis peut suffisamment se décomposer par oxydation pour permettre de créer un jeu entre la pièce obtenue par frittage et l'outillage de maintien oxydé sur ses bords. La pièce obtenue peut donc être séparée facilement de l'outillage de maintien après l'étape de frittage. En outre, lorsque la pièce refroidit après l'opération de frittage et voit donc son diamètre diminuer par rétractation thermique, la disparition de la majorité de la couronne par oxydation permet d'éviter le contact entre la pièce refroidie et l'outillage de maintien oxydé, ce qui limite encore les risques d'abîmer la pièce.

Selon un mode de réalisation de l'invention, le matériau compressible est du graphite expansé.

Le graphite expansé est un matériau particulièrement compressible et apte à absorber des différences de dilatation thermique importantes. En outre, le graphite expansé présente des propriétés d'oxydation particulièrement adaptées à une atmosphère de four de frittage. En effet, dans l'atmosphère non inerte et oxydante d'un four de frittage, le graphite expansé ne s'oxyde pas de manière notable dans les plages de températures trop basses pour permettre le frittage, et s'oxyde rapidement dans les plages de températures suffisamment élevées pour permettre le frittage.

Selon un autre mode de réalisation de l'invention, le disque est réalisé en céramique monolithique.

Le disque est donc facile à fabriquer tout en présentant un coefficient de dilatation thermique proche du coefficient de dilatation thermique de la préforme. En effet, un disque en céramique monolithique est moins coûteux et long à fabriquer qu'un disque en matériau composite à matrice céramique.

Selon un autre mode de réalisation de l'invention, au moins un outillage de maintien est disposé à une extrémité de la préforme selon son axe de révolution.

Selon un autre mode de réalisation de l'invention, la préforme de révolution comprend des particules de précurseurs de matrice dans ses porosités.

L'invention concerne en outre un procédé de fabrication d'une pièce de révolution en matériau composite comprenant les étapes suivantes :
- l'imprégnation d'une préforme fibreuse de révolution au moins par des particules de précurseurs de matrice,
- le placement de la préforme fibreuse de révolution comprenant les particules de précurseurs de matrice autour d'au moins un outillage de maintien, le ou les outillages de maintien comprenant une couronne réalisée en matériau compressible et un disque concentriques, la couronne comprenant une première surface en contact avec la périphérie du disque et une deuxième surface opposée à la première surface en contact avec une face interne de la préforme,
- le frittage de la préforme fibreuse comprenant les particules de précurseurs de matrice afin de former une matrice dans les porosités de ladite préforme fibreuse pour obtenir une pièce en matériau composite, la majorité du matériau compressible de la couronne étant décomposée par oxydation à la fin de l'étape de frittage,
- le retrait du ou des outillages de maintien de la pièce en matériau composite obtenue.

Selon un mode de réalisation de l'invention, le matériau compressible est du graphite expansé.

Selon un autre mode de réalisation de l'invention, l'étape d'imprégnation de la préforme fibreuse comprend également l'imprégnation de ladite préforme par un liant, le procédé comprenant en outre une étape de déliantage de la préforme fibreuse de révolution disposée autour de l'outillage de maintien avant l'étape de frittage.

Selon un autre mode de réalisation de l'invention, un dispositif de mise en position et de centrage est utilisé lors de l'étape de placement de la préforme fibreuse autour du ou des outillages de maintien, le dispositif de mise en position comprenant au moins une tige et un support, l'extrémité de la préforme fibreuse selon son axe de révolution la plus éloignée de la partie de la préforme fibreuse en contact avec l'outillage de maintien reposant sur le support, ledit support étant fixé à la tige et le ou les outillages de maintien étant fixés à la tige par leur centre lors de l'étape de placement.

L'utilisation d'un tel dispositif de mise en position permet de faciliter le montage du ou des outillages de maintien dans la préforme fibreuse et d'assurer un centrage satisfaisant, en limitant le risque d'abîmer ladite préforme lors de cette opération de montage.

### Brève description des dessins

[Fig. 1] La figure 1 est une vue schématique en perspective d'une préforme fibreuse de révolution.
[Fig. 2] La figure 2 est une vue schématique en coupe d'un outillage d'imprégnation dans lequel est disposée la préforme de la figure 1.
[Fig. 3] La figure 3 est en vue schématique en perspective éclatée d'un outillage de maintien monté dans la préforme fibreuse imprégnée des figures 1 et 2.
[Fig. 4] La figure 4 est une vue schématique en coupe d'un dispositif de mise en position de l'outillage de maintien de la figure 3 dans la préforme fibreuse.
[Fig. 5] La figure 5 est une vue schématique en coupe d'une installation de frittage selon l'invention comprenant la préforme fibreuse imprégnée maintenue par l'outillage de maintien de la figure 3.
[Fig. 6] La figure 6 est une vue schématique en coupe de l'installation de la figure 5 comprenant une pièce en matériau composite obtenue par frittage de la préforme fibreuse imprégnée.

### Description des modes de réalisation

Le procédé de fabrication d'une pièce en matériau composite thermostructural, de préférence de type oxyde/oxyde, conforme à la présente invention débute par la réalisation d'une préforme fibreuse destinée à former le renfort fibreux de la pièce.

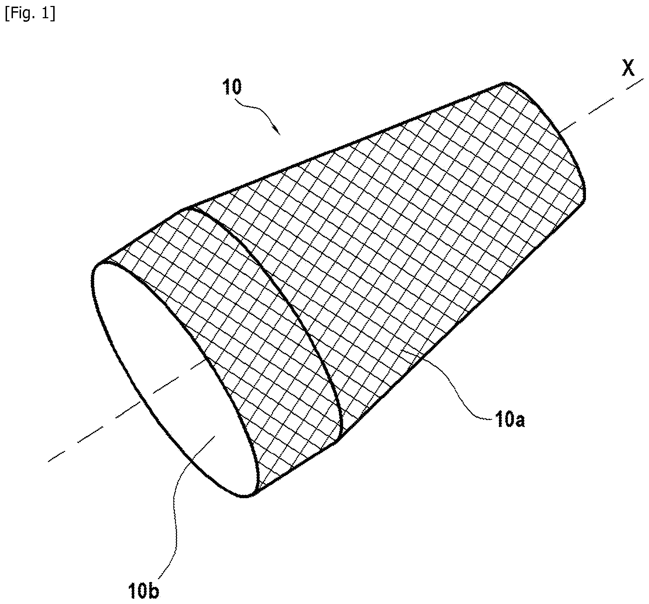

Un exemple de préforme fibreuse 10 est illustré sur la figure 1. La préforme 10 présente une forme de révolution d'axe de révolution X. Ainsi, la préforme 10 comprend une face externe 10a et une face interne 10b. La préforme fibreuse 10 peut notamment présenter une forme cylindrique, une forme tronconique, une forme de bulbe ou encore une association de ces formes. La préforme fibreuse 10 peut présenter une section maximale de diamètre supérieur à 700 mm.

La préforme fibreuse 10 peut ainsi être réalisée au moins en partie par empilements de strates ou plis obtenus par tissage bidimensionnel (2D). La préforme fibreuse 10 peut également être réalisée au moins en partie par empilements de strates ou plis obtenus par tissage tridimensionnel (3D). Par « tissage bidimensionnel », on entend ici un mode de tissage classique par lequel chaque fil de trame passe d'un côté à l'autre de fils d'une seule couche de chaîne ou inversement. Par « tissage tridimensionnel », on entend ici un tissage par lequel des fils de chaine traversent plusieurs couches de fils de trame, ou des fils de trame traversent plusieurs couches de fils de chaine. La préforme 10 peut également être réalisée au moins en partie par des nappes de fibres unidirectionnelles (UD).

La préforme fibreuse 10 peut être obtenue par dépose de rubans ou par placement automatique des fibres (AFP pour « Automated Fibre Placement »), par drapage, ou par enroulement filamentaire.

Enfin, la préforme 10 peut être obtenue au moins en partie par tressage ou tricot.

La préforme fibreuse 10 peut être formée de fibres constituées d'un des matériaux suivants : l'alumine, la mullite, la silice, un aluminosilicate, un borosilicate, du carbure de silicium, du carbone ou d'un mélange de plusieurs de ces matériaux.

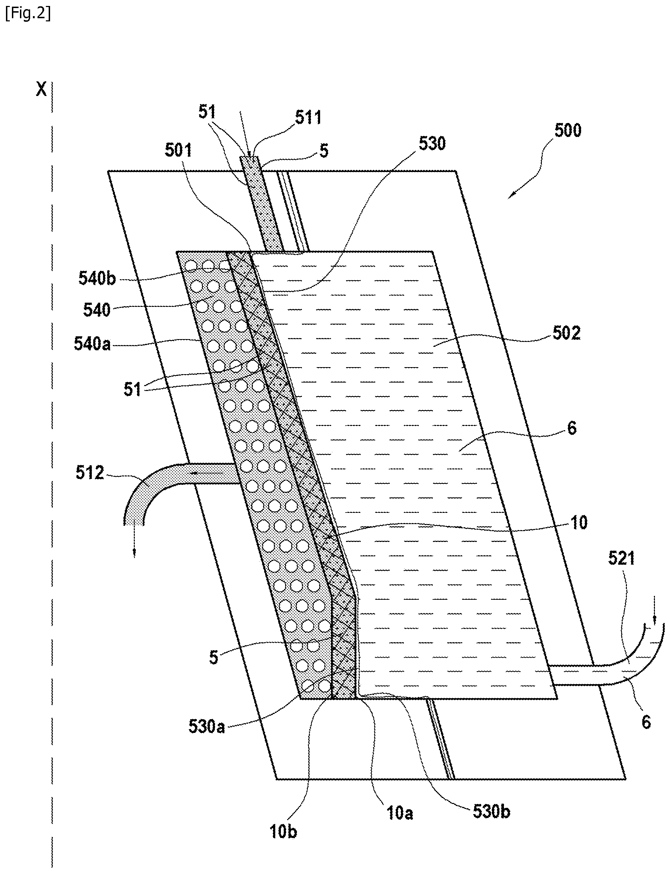

Lorsque la préforme fibreuse 10 est réalisée, celle-ci est imprégnée par un ou plusieurs précurseurs de matrice. De préférence, la préforme fibreuse 10 est imprégnée par une barbotine. L'imprégnation de la préforme fibreuse 10 par une barbotine peut être réalisée en disposant ladite préforme 10 dans un moule fermé par un contre-moule rigide, le moule et le contre-moule définissant un volume interne ayant la forme de la pièce à fabriquer. L'imprégnation de la préforme fibreuse 10 peut également être réalisée sous une membrane souple, comme illustré sur la figure 2. L'imprégnation de la préforme fibreuse 10 sous membrane souple est de manière bien connue particulièrement adaptée à la fabrication de pièces de forme élancées et d'épaisseur faible, en permettant notamment un meilleur contrôle des dimensions de la pièce.

Dans l'exemple illustré sur la figure 2, la préforme fibreuse 10 est disposée dans un outillage d'imprégnation 500. Ledit outillage d'imprégnation 500 comprend un moule, qui comporte d'une part une chambre d'imprégnation 501 dans laquelle est disposée une préforme fibreuse 10 et d'autre part une chambre de compaction 502.

Une barbotine 5 comprend une phase liquide dans laquelle sont dispersées des particules 51 de précurseur de matrice. Plus particulièrement, la barbotine peut correspondre à une suspension contenant une phase liquide et une poudre de particules de précurseur de matrice. La phase liquide peut être notamment constituée par de l'eau, de l'éthanol ou tout autre liquide dans lequel il est possible de mettre la poudre désirée en suspension. Le pH de la phase liquide de la barbotine peut être adapté selon la nature des particules, par exemple de l'eau avec un pH acide dans le cas d'une poudre d'alumine.

Un liant organique peut être aussi ajouté (PVP ou PVA soluble dans l'eau par exemple). Ce liant permet d'assurer la tenue du cru éventuellement après séchage et avant déliantage et frittage.

La barbotine peut par exemple correspondre à une suspension aqueuse constituée de poudre d'alumine dont la dimension particulaire moyenne (D50) est comprise entre 0,1 µm et 1 µm et dont la fraction volumique est comprise entre 5% et 50%, la suspension étant acidifiée par de l'acide nitrique (pH compris entre 1,5 et 4). En outre de l'alumine, les particules d'oxyde réfractaire peuvent être également en un matériau choisi parmi la mullite, la silice, un aluminosilicate, un aluminophosphate, la zircone, un carbure, un borure, un nitrure et du carbone. En fonction de leur composition de base, les particules d'oxyde réfractaire peuvent être en outre mélangées avec des particules d'alumine, de zircone, d'aluminosilicate, d'oxydes de Terre rare, de dissilicates de Terre rare (utilisés par exemple dans les barrières environnementales ou thermiques) ou toute autre charge permettant de rajouter des fonctions spécifiques au matériau final (noir de carbone, graphite, carbure de silicium, etc.).

La barbotine 5 est destinée à être injecté dans la chambre d'imprégnation 501 et un fluide de compression 6 est destiné à être injecté dans la chambre de compaction 502. Ainsi, la chambre d'imprégnation 501 comporte un ou plusieurs orifices d'entrée 511 permettant l'introduction de la barbotine 5 dans ladite chambre d'imprégnation 501. Le ou les orifices d'entrée 511 de la chambre d'imprégnation 501 peuvent être équipés d'une vanne. La chambre d'imprégnation 501 peut également comporter un ou plusieurs orifices de sortie 512 permettant l'évacuation de la phase liquide de la barbotine 5. De même, la chambre de compaction 502 comporte un ou plusieurs orifices d'entrée 521 permettant l'introduction du fluide de compression 6 dans ladite chambre de compaction 502, et un ou plusieurs orifices de sortie 521 permettant l'aspiration et l'évacuation du fluide de compression 6 présent dans ladite chambre de compaction 502. Les orifices d'entrée et de sorties 521 de la chambre de compaction 502 peuvent être confondus, ou au moins en partie confondus, comme dans l'exemple illustré sur la figure 2. Le ou les orifices d'entrée 521 de la chambre de compaction 502 peuvent être équipés d'une vanne.

Le fluide de compression 6 peut par exemple être de l'eau ou de l'huile.

La chambre d'imprégnation 501 peut comporter une strate de filtration 540 interposée entre la préforme fibreuse 10 et le ou les orifices de sortie 512 de la chambre d'imprégnation 501. La strate de filtration 540 permet de retenir les particules 51 de précurseur de matrice de la barbotine 5 dans la préforme 10 tout en laissant passer la phase liquide de la barbotine 5, la phase liquide de la barbotine 5 étant évacuée par le ou les orifices de sortie 512 de la chambre d'imprégnation 501.

La strate de filtration 540 comprend une première face 540a et une deuxième face 540b, opposée à la première face 540a. De préférence, la face interne 10b de la préforme 10 repose sur la deuxième face 540b de la strate de filtration 540. Ainsi, la deuxième face 540b de la strate de filtration 540 présente une forme adaptée à la forme de la face interne 10b de la préforme 10b. De préférence, la strate de filtration 540 est donc un volume de révolution d'axe de révolution X.

La strate de filtration 540 peut par exemple être réalisée en polytétrafluoroéthylène (PTFE) microporeux mais également en plâtre ou en papier. Pour réaliser la strate de filtration 540, on peut par exemple utiliser un matériau présentant une taille de pores comprise entre 1 µm et 5 µm. La strate de filtration 540 peut avoir une perméabilité résultante comprise entre 10⁻¹⁴ m² et 10⁻¹⁵ m².

Un élément rigide ajouré (non représenté) peut être interposé entre la strate de filtration 540 et le ou les orifices de sortie 512 de la chambre d'imprégnation 501. Un tel élément rigide ajouré est notamment décrit dans le document US 20190134848 A1. Cet élément rigide ajouré a pour fonction de faciliter l'évacuation de la phase liquide ayant traversé la strate de filtration 540 par le ou les orifices de sortie 512, quel que soit son point de sortie au niveau de la première face 540a de la strate de filtration 540. Pour faciliter encore l'évacuation de la phase liquide de la barbotine 5, l'élément rigide ajouré peut comporter des découpes ou des cavités entre ses jours.

Un élément de distribution (non représenté) peut éventuellement être disposé entre la strate de filtration 540 et l'élément rigide ajouré le cas échéant, ledit élément de distribution présentant une perméabilité supérieure à celle de la strate de filtration 540. Un tel élément de distribution permet d'obtenir une vitesse d'écoulement de la phase liquide plus uniforme à l'intérieur de la strate de filtration 540.

La chambre d'imprégnation 501 et la chambre de compaction 502 du moule sont séparées par une membrane souple 530. La membrane souple 530 est placée en regard de la face externe 10a de la préforme 10. La membrane 530 comprend une première surface 530a et une deuxième surface 530b opposée à la première surface 530a. La première surface 530a de la membrane 530 est placée en regard de la préforme 10. La première surface 530a de la membrane 530 est présente du côté de la chambre d'imprégnation 501, et la deuxième surface 530b de la membrane 530 est présente du côté de la chambre de compaction 502.

La membrane 530 peut permettre d'appliquer une pression sur la barbotine 5 présente dans la chambre d'imprégnation 501 afin de faire pénétrer ladite barbotine 5 dans la préforme fibreuse 10. La membrane 530 peut également permettre d'appliquer une pression de compactage sur la préforme fibreuse 10 disposée dans la chambre d'imprégnation 501. La pression appliquée par la membrane 530 est produite par le fluide de compression 6 qui, en appliquant une pression sur la membrane 530, déforme la membrane 530 contre la préforme fibreuse 10. La pression appliquée par le fluide de compression 6 sur la membrane 530 peut également permettre de maintenir en place ladite membrane 530 contre la préforme fibreuse 10 si la pression augmente dans la chambre d'imprégnation 501. Ainsi, la première surface 530a de la membrane 530 peut être destinée à être au contact de la préforme fibreuse 10 lorsque la chambre de compaction 502 est remplie par le fluide de compression 6.

La membrane 530 est par exemple en silicone, ou par exemple dans un matériau de type caoutchouc. La membrane 530 peut être renforcée par des fibres de verre ou de polyester. La membrane 530 doit être réalisée dans un matériau résistant aux températures auxquelles ladite membrane 530 peut être soumise lors du procédé complet, ainsi qu'aux fluides avec lesquels la membrane 530 va être en contact. La membrane 530 doit présenter une compressibilité cohérente avec la tolérance dimensionnelle recherchée pour la pièce.

L'imprégnation de la préforme fibreuse 10 peut être réalisée en injectant d'abord la barbotine 5 dans la chambre d'imprégnation 501, puis en injectant le fluide de compression 6 dans la chambre de compaction 502. Le fluide de compression 6 applique une pression sur la barbotine 5 au travers de la membrane 530. Le fluide de compression 6 impose une pression sur l'intégralité de la membrane 530 et, par conséquent, sur l'intégralité de la barbotine 5 présente au-dessus de la préforme 10.

La pression appliquée par la membrane 530 sur la barbotine 5 et sur la préforme fibreuse 10 est de préférence réduite, de manière à faire pénétrer la barbotine 5 dans la préforme 10 et compacter suffisamment ladite préforme 10 pour permettre à la phase liquide de la barbotine 5 d'être drainée par la strate de filtration 540 sans dégrader la préforme fibreuse 10. En combinaison avec l'application d'une pression sur la barbotine par le fluide de compression 6, un pompage, par exemple au moyen d'une pompe à vide primaire (non représentée sur la figure 2), peut être réalisé au niveau du ou des orifices de sortie 512 de la chambre d'imprégnation 501. Ce pompage est optionnel. En outre, l'outillage d'imprégnation 500 peut être muni de moyens de chauffage, comme des éléments résistifs intégrés aux parois, afin d'augmenter la température dans la chambre de compaction 502 et de faciliter l'évacuation de la phase liquide de la barbotine par évaporation. La strate de filtration 540 permet de retenir les particules 51 de précurseur de matrice présentes dans la barbotine 5 à l'intérieur des porosités de la préforme 10, lesdites particules 51 se déposant ainsi progressivement dans la préforme fibreuse 10. Ces particules 51 permettent de former la matrice après frittage.

Selon une variante, l'imprégnation de la texture fibreuse 10 peut être réalisée en injectant d'abord le fluide de compression 6, puis la barbotine 5, par exemple selon le procédé décrit dans le document US 2021046671 A1. Les injections du fluide de compression 6 et de la barbotine 5 peuvent également être réalisées simultanément, ou au moins en partie simultanément. En outre, on peut terminer l'injection de la barbotine avant de terminer l'injection du fluide de compression, ou on peut terminer l'injection du fluide de compression avant de terminer l'injection de la barbotine.

L'imprégnation de la préforme fibreuse 10 peut également être réalisée avec plusieurs barbotines. L'imprégnation de la préforme fibreuse 10 peut également être réalisée grâce aux techniques de type infusion, de moulage par injection dites « RTM » ou d'aspiration de poudre submicronique dites « APS ».

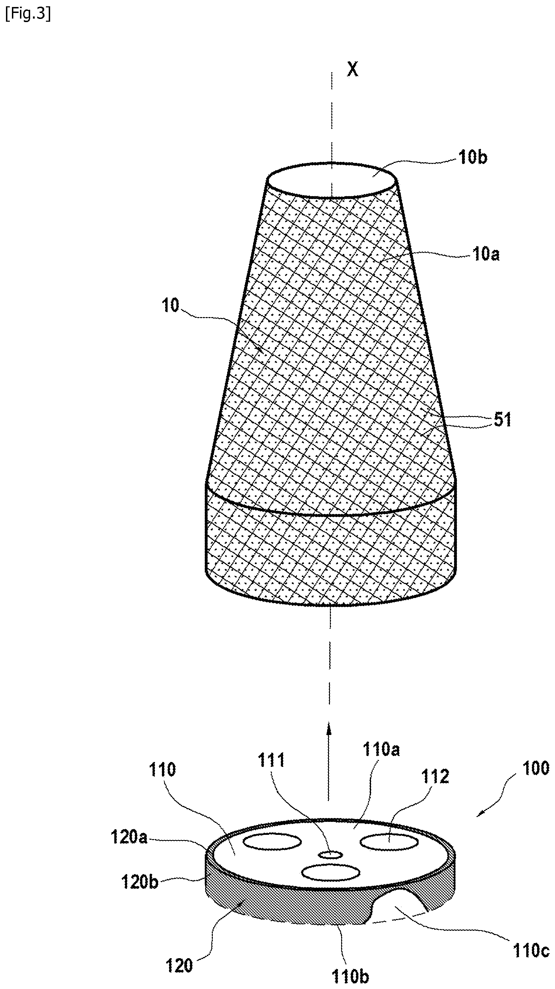

Lorsque la préforme fibreuse 10 est convenablement imprégnée, celle-ci peut être retirée de l'outillage d'imprégnation 500. Le préforme fibreuse 10 imprégnée peut être retirée de l'outillage d'imprégnation 500 après une phase de séchage, de préférence à une température supérieure à 60°C et inférieure à 90°C, qui permet d'évacuer le reste de la phase liquide encore présente. Ainsi, les porosités de la préforme fibreuse 10 sont partiellement comblées par les particules 51 de précurseur de matrice, comme illustré sur la figure 3.

La préforme fibreuse peut également être réalisée à partir de strates ou de plis tels que décrits précédemment pré-imprégnées. Ainsi, la préforme fibreuse peut par exemple être réalisée de manière bien connue par drapage de strates ou de plis obtenus par tissage bidimensionnel ou tridimensionnel pré-imprégnés par une barbotine telle que décrite précédemment, ou alors par placement automatique de fibres ou de textures fibreuses pré-imprégnées. Une telle préforme fibreuse est ensuite passée en autoclave, puis démoulée pour être prête au frittage.

Avant de procéder au frittage, et le cas échéant au déliantage, de la préforme fibreuse 10 comprenant les particules 51 de précurseur de matrice, on dispose ladite préforme fibreuse 10 autour d'au moins un outillage de maintien 100, comme illustré sur la figure 3.

Chaque outillage de maintien 100 comprend au moins un disque 110 et une couronne 120. Le disque 110 et la couronne 120 sont concentriques. Le disque 110 comprend deux faces circulaires 110a et 110b opposées et une face latérale 110c, ladite face latérale 110c reliant la face circulaire supérieure 110a à la face circulaire inférieure 110b. La face latérale 110c du disque 110 peut présenter une géométrie adaptée à la partie de la face interne 10b avec laquelle l'outillage 100 est en contact. Ainsi, la face latérale 110c du disque 110 peut être cylindrique ou tronconique.

Lorsque l'outillage de maintien 100 est disposé dans la préforme fibreuse 10, l'axe de révolution de la forme générale du disque 110 peut être confondu avec l'axe de révolution X de la préforme 10. Plus généralement, lorsque l'outillage de maintien 100 est disposé dans la préforme fibreuse 10, l'axe de révolution de la forme générale de l'outillage de maintien 100 peut être confondu avec l'axe de révolution X de la préforme 10. Ainsi, de préférence, l'outillage de maintien 100 s'étend perpendiculairement à l'axe de révolution X de la préforme 10 lorsqu'il est déposé à l'intérieur de ladite préforme 10.

De préférence, le ou les outillages de maintien 100 sont disposés à une extrémité de la préforme fibreuse 10 selon l'axe de révolution X. En particulier, un outillage de maintien 100 est de préférence disposé à l'extrémité de plus grand rayon de la préforme fibreuse 10 selon l'axe de révolution X. En effet, les extrémités de la préforme 10 selon son axe de révolution X sont plus fragiles et plus sensibles aux déformations, en particulier lorsqu'elles présentent un rayon important : il est donc plus judicieux de placer le ou les outillages de maintien dans ces parties sensibles de la préforme 10.

Le disque 110 peut comprendre un ou plusieurs orifices traversants 111 et 112. Ainsi, lesdits orifices traversants 112 débouchent d'une part sur la face circulaire supérieure 110a du disque 110, et d'autre part sur la face circulaire inférieure 110b dudit disque 110. Lesdits orifices traversants 111 et 112 peuvent servir de prise ou de zone d'accrochage pour faciliter la manutention de l'outillage 100. Le disque 110 peut comprendre un orifice traversant 111 centré sur l'axe de révolution du disque 110, c'est-à-dire centré sur l'axe de révolution de la face latérale 110c du disque 110. Ainsi, l'axe de révolution dudit orifice traversant 111 est confondu avec l'axe de révolution du disque 110, c'est-à-dire confondu avec l'axe de révolution de la face latérale 110c du disque 110. Le disque 110 peut alors présenter une forme annulaire. Les orifices traversants 111 et 112 permettent également d'alléger le disque 110. Le ou les orifices traversants 112 du disque 110 ne comprenant pas l'axe de révolution du disque 110 sont de préférence disposés angulairement de manière régulière autour de l'axe du disque 110, comme illustré sur la figure 3. Le ou les orifices traversants 112 du disque 110 ne comprenant pas l'axe de révolution du disque 110 sont de préférence de taille identique et leurs axes sont situés à une distance identique de l'axe du disque 110. Une telle régularité de placement et de dimensionnement des orifices traversants du disque 110 permet de conserver une dilatation thermique régulière du disque 110 selon la direction radiale. Le ou les orifices traversants 112 du disque 110 ne comprenant pas l'axe de révolution du disque 110 peuvent présenter un diamètre supérieur à 50 mm.

La couronne 120 comprend une première face 120a disposée en contact avec la face latérale du disque 110. Ainsi, la couronne 120 comprend une première face 120a disposée au contact de la périphérie du disque 110. La couronne 120 comprend également une deuxième face 120b, opposée à la première face 120a de ladite couronne 120, destinée à être au contact de la préforme fibreuse 10 comprenant les particules 51. Plus précisément, la deuxième face 120b de la couronne 120 est destinée à être au contact d'une partie réduite de la face interne 10b de la préforme 10 comprenant les particules 51. Lorsque l'outillage de maintien est monté dans la préforme fibreuse 10, la couronne 120 comprend la première surface 120a en contact avec la périphérie du disque 110 et la deuxième surface 120b opposée à la première surface 120a en contact avec une partie de la face interne 10b de la préforme 10. Ainsi, la deuxième face 120b de la couronne 120 présente une géométrie adaptée à la partie de la face interne 10b avec laquelle ladite deuxième face 120b est en contact. Ainsi, la deuxième face 120b de la couronne 120 peut par exemple être cylindrique ou tronconique.

De préférence, le disque 110 est réalisé en céramique monolithique. On entend par céramique monolithique une céramique sans renfort fibreux, dont la porosité peut être comprise entre 0% et 81%, et de préférence entre 10% et 40%. Plus la céramique monolithique est poreuse, plus le disque 110 est facile à usiner, léger et peu coûteux.

Le disque 110 peut être réalisé en mullite. Si le disque 110 est réalisé en mullite, celui-ci peut comprendre 60% à 80% d'alumine, et de préférence 65% à 70% d'alumine. En effet, un disque 110 réalisé en mullite avec de tels pourcentages d'alumine permet une dilatation thermique réduite dudit disque 110, et donc une compression réduite de la couronne 120, tout en assurant le contact entre l'outillage de maintien 100 et la préforme 110 jusqu'à des températures élevées, et en particulier jusqu'à des températures supérieures à la température de début de frittage. La mullite présente également l'avantage d'être peu chère.

Le disque 110 est de préférence réalisé en alumine. En effet, un disque 110 réalisé en alumine présente un coefficient de dilatation thermique quasiment identique au coefficient de la préforme à maintenir, ce qui permet de limiter l'épaisseur de la couronne 120.

Le disque 110 peut également être réalisé en matériau composite à matrice céramique de type CMC, par exemple de type C/SiC ou SiC/SiC. En particulier, si la pièce à fabriquer est une pièce en matériau composite de type C/SiC, on peut choisir un disque réalisé en matériau composite de type C/SiC, et si la pièce à fabriquer est une pièce en matériau composite de type SiC/SiC, on peut choisir un disque réalisé en matériau composite de type SiC/SiC.

De préférence, le coefficient de dilatation thermique du matériau du disque 110 est proche du coefficient de dilatation thermique de la préforme fibreuse 10. Ainsi, de préférence, la valeur du coefficient de dilatation thermique linéaire selon la direction radiale du matériau du disque 110 est comprise entre 90% et 110% de la valeur du coefficient de dilatation thermique selon la direction radiale du matériau de la préforme 10. En particulier, le coefficient de dilatation thermique linéaire du matériau du disque 110 peut être compris entre 5×10⁻⁶ K⁻¹ et 8×10⁻⁶ K⁻¹, et de préférence compris entre 6×10⁻⁶ K⁻¹ et 7,5×10⁻⁶ K⁻¹. En effet, de telles valeurs favorisent une dilatation réduite du matériau du disque 110 afin de limiter la compression de la couronne 120 contre la préforme 10 tout en assurant le contact entre l'outillage de maintien 100 et la préforme 110 jusqu'à des températures élevées, et en particulier jusqu'à des températures supérieures à la température de début de frittage.

Le matériau de la couronne 120 est un matériau compressible, c'est-à-dire un matériau apte à se comprimer d'au moins 20% lorsque le disque 110 se dilate et presse ledit matériau compressible contre la face interne 10b de la préforme fibreuse 10. De préférence, le matériau compressible de la couronne 120 est apte à se comprimer d'au moins 30% lorsque le disque 110 se dilate et presse ledit matériau compressible contre la face interne 10b de la préforme fibreuse 10.

Ainsi, la couronne 120 est de préférence réalisée en graphite expansé, qui se présente par exemple sous la forme de feuilles de graphite flexibles. Le graphite expansé présente en outre l'avantage de pouvoir aisément être enroulé autour du disque 110. La couronne 120 peut également être réalisée en feutre, par exemple de carbone.

La couronne 120 montée entre le disque 110 et la face interne 10b de la préforme 10 comme décrit précédemment peut présenter une épaisseur selon la direction radiale comprise entre 2 mm et 15 mm selon la dilatation thermique dudit disque 110 et de ladite préforme 10. L'épaisseur de la couronne 120 est déterminée de manière bien connue par des calculs de dilatation thermique de la préforme 10, de la couronne 120 et du disque 110, de sorte à assurer le contact entre ladite couronne 120 et la face interne 10b de la préforme 10 au moins jusqu'au début de l'étape de frittage. En particulier, si le disque 110 est réalisé en mullite, la couronne 120 peut présenter une épaisseur selon la direction radiale comprise entre 5 mm et 15 mm selon la dilatation thermique dudit disque 110 et de ladite préforme 10. Si le disque 110 est réalisé en alumine, la couronne 120 peut présenter une épaisseur selon la direction radiale comprise entre 2 mm et 12 mm selon la dilatation thermique dudit disque 110 et de ladite préforme 10.

De préférence, le matériau compressible de la couronne 120 est apte à se décomposer par oxydation en atmosphère oxydante et à haute température. En particulier, le matériau compressible de la couronne 120 peut être configuré pour être en majorité décomposé par oxydation lors d'une étape de frittage sous air. En particulier, le matériau compressible de la couronne 120 peut être configuré pour être en majorité décomposé par oxydation à partir d'une valeur de température comprise entre 600°C et 1200°C. En outre, le matériau compressible de la couronne 120 peut être configuré pour être en majorité inaltéré par oxydation lors d'une étape de déliantage. En particulier, le matériau compressible de la couronne 120 peut être configuré pour être en majorité inaltéré par oxydation jusqu'à 400°C, et de préférence jusqu'à 600°C. Un matériau compressible réalisé en graphite expansé peut répondre à de telles propriétés. Sous atmosphère inerte, comme c'est le cas lors d'une opération de pyrolyse ou lors d'une opération d'infiltration chimique en phase gazeuse, le graphite expansé ne s'oxyde pas. Sous atmosphère très pauvre en oxygène, le graphite expansé a une cinétique d'oxydation très ralentie jusqu'à la température de frittage.

De préférence, les matériaux du disque 110 et de la couronne 120 sont choisis de sorte que la couronne 120 soit très peu comprimée à température ambiante, lorsque l'outillage de maintien 100 est mis en place sur la face interne 10b de la préforme 10, et soit très peu comprimée lors de l'éventuel déliantage de ladite préforme 10. Ainsi, l'outillage 100 applique une pression très faible sur la préforme 10 au moment de sa mise en place, afin de limiter le risque d'endommagement de ladite préforme 10, et applique une pression très faible sur la préforme 10 au moment de son éventuel déliantage, lorsque ladite préforme 10 présente une tenue faible et par conséquent un risque de déformation accru.

Plusieurs outillages de maintien 100 tels que décrit précédemment peuvent être disposés dans la préforme fibreuse 10, sous réserve que leur placement dans ladite préforme 10 soit possible en tenant compte des variations de section de ladite préforme.

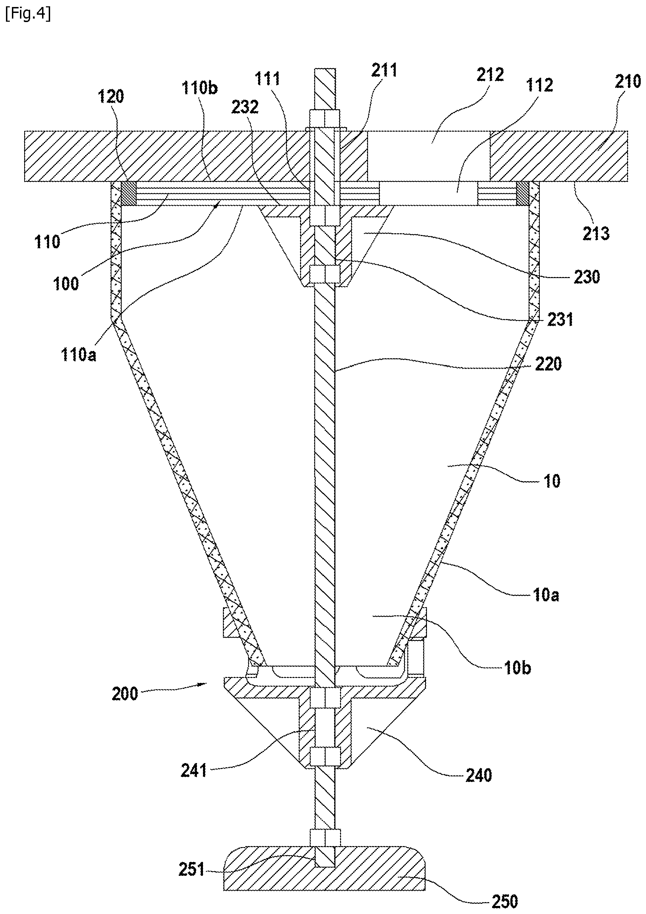

Afin de faciliter la mise en place de l'outillage de maintien 100 à l'intérieur de la préforme 10 et pour ne pas endommager ladite préforme, un dispositif annexe de mise en position 200 peut être utilisé, comme illustré sur la figure 4. Ce dispositif annexe de mise en position 200 permet notamment d'assurer un bon centrage entre l'outillage de maintien 100 et la préforme fibreuse 10.

Dans l'exemple illustré sur la figure 4, le dispositif annexe de mise en position 200 comprend une tige 220 et un pied 250 destiné à supporter la masse du dispositif de mise en position 200 lorsque celui-ci est monté avec la préforme fibreuse 10 et l'outillage de maintien 100. Le pied 250 comprend un orifice ou un alésage 251 permettant la fixation de la tige 220. La tige 220 est de préférence filetée. Si la tige 220 est filetée, l'alésage 251 du pied 250 est de préférence fileté.

Le dispositif de mise en position 200 peut comprendre en outre un support 240 comportant un orifice ou un alésage central 241 traversant, qui peut être fileté ou non. Ainsi, le support 240 du dispositif 200 est apte à être fixé à la tige 220, ladite tige 220 traversant le support 240 par l'alésage central 241. Le support 240 est de préférence maintenu à une distance non nulle du pied 250, par exemple par le biais d'écrous. Le support 240 est destiné à accueillir et à être en contact avec une extrémité de la préforme fibreuse 10 selon son axe de révolution X. De préférence, le support 240 est destiné à accueillir l'extrémité de la préforme fibreuse 10 selon son axe de révolution X la plus éloignée de la partie de la préforme fibreuse 10 qui accueille l'outillage de maintien 100, afin de faciliter le montage du dispositif de mise en position 200, de l'outillage de maintien 100 et de la préforme 10. De préférence, le support 240 est destiné à accueillir l'extrémité de la préforme fibreuse 10 selon son axe de révolution X présentant le plus petit rayon. Le support 240 peut être en contact avec la face externe 10a de la préforme fibreuse 10. Le support 240 peut être réalisé par fabrication additive, afin d'obtenir une forme de support 240 la plus adaptée possible à l'extrémité de la préforme 10 en contact avec le support 240 lorsque ladite préforme 10 est montée avec le dispositif de mise en position 200.

De préférence, l'un des orifices traversants 111 du disque 110 permet le passage de la tige 220 du dispositif de mise en position 200. Ledit orifice traversant 111 permettant le passage de la tige 220 peut être fileté. L'axe de cet orifice traversant 111 est de préférence confondu avec l'axe du disque 110.

Le dispositif de mise en position 200 peut comprendre en outre au moins une platine 230 comportant un orifice ou un alésage central 231 traversant, qui peut être fileté ou non. Ainsi, la platine 230 du dispositif 200 est apte à être fixée à la tige 220, ladite tige 220 traversant la platine 230 par l'alésage 231. La platine 230 peut être destinée à fixer un outillage de maintien 100 à la tige 220 du dispositif de mise en position 200, ou à maintenir un outillage de maintien 100 lors de la mise en position. A cet effet, la platine 230 comprend une face d'assemblage 232 destinée à être au contact de la face circulaire supérieure 110a du disque 110 d'un outil de maintien 100. Ainsi, de préférence, le dispositif de mise en position 200 comprend une platine 230 pour chaque outillage de maintien 100.

Le ou les orifices traversants 112 du disque 110 distincts de l'orifice 111 permettant le passage de la tige 220 peuvent permettre de faciliter le montage avec le dispositif de mise en position 200, en permettant l'accès à la platine 230 ou aux écrous. Ainsi, de préférence, le ou les orifices traversants 112 du disque 110 distincts de l'orifice 111 sont de taille suffisante pour permettre le passage d'une main ou d'un outil de serrage adapté.

Le dispositif de mise en position 200 peut également comprendre une plaque 210 comportant un orifice ou un alésage central 211, qui peut être fileté ou non. L'orifice central 211 est configuré pour permettre le passage de la tige 220. La plaque 210 est notamment fixée à la tige 220 au moyen d'écrous, comme illustré sur la figure 4. La plaque 210 comprend une face d'assemblage 213 destinée à être au moins en partie en contact avec l'extrémité de la préforme fibreuse 10 opposée au support 240. De préférence, la face d'assemblage 213 de la plaque 110 est également destinée à être en contact avec la face circulaire inférieure 110b du disque 110 d'un outillage de maintien 100. De préférence, la plaque 210 du dispositif de mise en position 200 comprend un ou plusieurs orifices traversants 212. Le ou les orifices traversants 212 sont disposés de sorte que, lorsque la préforme fibreuse 10 est montée avec le dispositif de mise en position 200, le ou les orifices traversants 212 de la plaque 210 soient disposés dans le prolongement du ou des orifices traversants 112 de l'outillage de maintien 100.

Lorsque la préforme 10, l'outillage de maintien 100 et le dispositif de mise en position 200 sont montés ensemble, la ou les platines 230 sont présentes entre le support 240 et la plaque 210, et chaque outillage de maintien 100 est présent entre au moins une platine 230 et la plaque 210, comme illustré sur la figure 4.

Lorsque le ou les outillages de maintien 100 ont été montés convenablement dans la préforme fibreuse 10 au moyen du dispositif de mise en position 200, l'ensemble assemblé comprenant le dispositif de mise en position 200, l'outillage de maintien 100 et la préforme fibreuse 10 peut être retourné. Le dispositif de mise en position 200 permet de retourner la préforme fibreuse 10 sans la manipuler directement, ce qui est avantageux dans la mesure où celle-ci n'est pas encore frittée, et donc fragile et sensible à la déformation. Lorsque le retournement est terminé, la préforme fibreuse 10 est alors de préférence supportée par la plaque 210. Lorsque le retournement est terminé, le dispositif de mise en position 200 peut être retiré intégralement ou partiellement. De préférence, lorsque le retournement est terminé, on laisse la plaque 210 au contact de la préforme 10 et l'on retire le reste du dispositif de mise en position 200, et en particulier on retire la tige 220, la ou les platines 230, le support 240 et le pied 250 si utilisés.

De préférence, la plaque 210 comprend un ou des orifices traversants 212 distincts de l'orifice traversant central 211 permettant le passage de la tige 220. Lorsque la face d'assemblage de la plaque 210 est en contact avec un outillage de maintien 100, au moins une partie du ou des orifices traversants 212 de la plaque 210 sont situés dans le prolongement d'au moins une partie du ou des orifices traversants 112 de l'outillage de maintien 100. En effet, la plaque 210 peut être conservée comme support de la préforme 10 lors des opérations de frittage et, le cas échéant, de déliantage. De tels orifices traversants 212 sur la plaque 210 sont ainsi aptes à laisser passer les gaz brûlés lors du frittage ou les éventuelles imperfections devant être évacuées lors du frittage ou du déliantage. Le matériau de la plaque 210 peut alors présenter des propriétés compatibles avec une étape de frittage ou de déliantage, par exemple en présentant une inertie chimique et une dilatation thermique adaptée à de tels procédés. La plaque 210 peut éventuellement avoir subi au préalable un traitement afin de stabiliser son matériau et éviter un parasitage de l'étape de frittage.

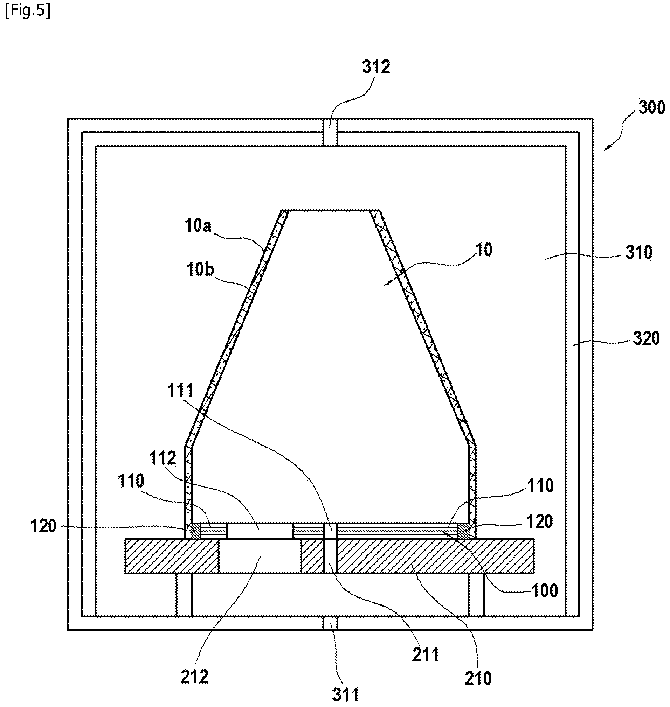

La préforme fibreuse 10 maintenue par le ou les outillages de maintien 100 est ensuite disposée dans un four de frittage 300, comme illustré sur la figure 5. Comme expliqué précédemment, la préforme fibreuse 10 repose de préférence sur la plaque 210 dans le four de frittage. Le four de frittage 300 comprend au moins une chambre 310 dans laquelle la préforme fibreuse 10 maintenue par le ou les outillages de maintien 100 est disposée, reposant ou non sur la plaque 210 du dispositif de mise en position 200. Le four de frittage 300 comprend des dispositifs de chauffage 320. Le four de frittage 300 peut être un four à gaz fonctionnant à pression atmosphérique, le four étant chauffé par un ou plusieurs brûleurs à gaz. Les gaz produits par les brûleurs, après avoir réchauffé le four, sont extraits par un extracteur afin de laisser la place aux gaz formés en continu par la combustion.

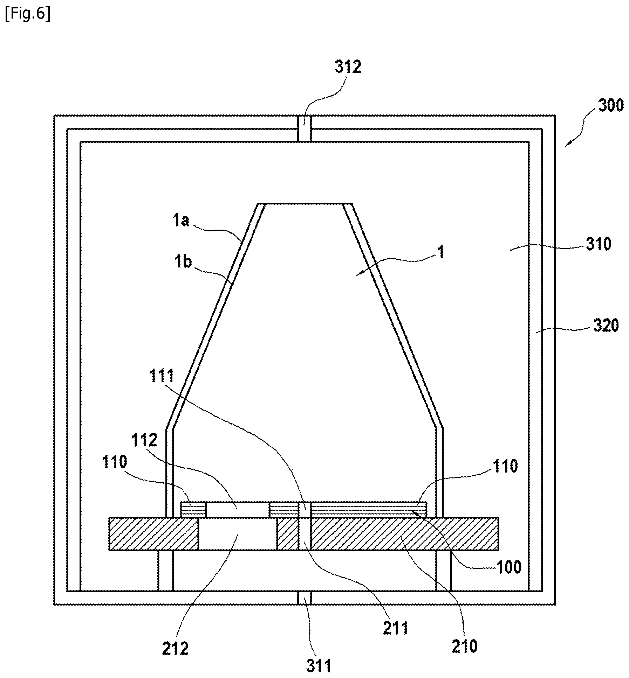

Le four de frittage 300 peut éventuellement comprendre un ou plusieurs orifices d'entrée de gaz 311 débouchant dans la chambre 310 et un ou plusieurs orifices de sortie de gaz 312 de la chambre 310, comme illustré sur les figures 5 et 6. Le ou les orifices d'entrée de gaz et le ou les orifices de sortie de gaz peuvent être au moins en partie confondus.

L'atmosphère dans la chambre 310 du four de frittage 300 comprend classiquement de l'oxygène, ce qui permet de pouvoir obtenir une décomposition par oxydation du matériau compressible de la couronne 120. Toutefois, de préférence, la teneur en oxygène de l'atmosphère de la chambre 310 du four de frittage 300 est limitée, afin de limiter la cinétique d'oxydation du matériau compression de la couronne 120 et de ne pas oxyder prématurément ledit matériau compressible de la couronne 120, et en particulier afin de ne pas oxyder la majorité du matériau compressible de la couronne 120 avant le début du frittage des particules de précurseur de matrice dans la préforme 10.

La montée en température dans le four de frittage 300 accueillant la préforme fibreuse 10 peut se faire progressivement.

Si la préforme fibreuse 10 comprend un liant, la montée en température du four de frittage 300 permet de réaliser le déliantage de la préforme, avant d'atteindre les températures permettant le frittage de ladite préforme 10. La température de la chambre 310 du four 300 est par exemple comprise entre 200°C et 450°C lors du déliantage de la préforme fibreuse 10.

La température de la chambre 310 du four 300 augmente encore jusqu'à atteindre les températures permettant le frittage de la préforme 10. La température de la chambre 310 du four 300 est par exemple comprise entre 1000°C et 1200°C lors du frittage de la préforme fibreuse 10, et en particulier lors du frittage des particules de précurseurs de matrice présentes dans la préforme fibreuse 10. L'étape de frittage permet de former une matrice dans les porosités de la préforme 10, de sorte à obtenir une pièce 1 en matériau composite comme illustré sur la figure 6. La pièce 1 en matériau composite comprend une face externe 1a, présentant une géométrie sensiblement identique à la géométrie de la face externe 10a de la préforme 10, et une face interne 1b, présentant une géométrie sensiblement identique à la géométrie de la face interne 10b de la préforme 10.

Après le déliantage, la préforme fibreuse 10 déliantée est particulièrement fragile et sensible aux déformations. Il est donc important que le matériau compressible de la couronne 120 soit conservé pendant le déliantage de la préforme 10, et de préférence au moins jusqu'au début du frittage de ladite préforme 10. En effet, lorsque le frittage commence, les particules de précurseurs de matrice présentes dans les porosités de la préforme sont frittées et la matrice commence à se former dans lesdites porosités de la préforme, améliorant sa tenue et son maintien. Ainsi, de préférence, l'oxydation du matériau compressible de la couronne 120 doit être très limitée pendant le déliantage, relativement faible jusqu'au début de l'opération de frittage et importante lors de l'opération de frittage. De préférence, lorsque l'opération de frittage est terminée comme illustré sur la figure 6, la majorité du matériau compressible de la couronne 120 a disparu pour faciliter le retrait du ou des outillages de maintien 100 de la pièce 1 en matériau composite, et pour éviter le risque de contact entre le disque 110 et la face interne 1b de la pièce 1 en matériau composite lors de son refroidissement. En particulier, dans les conditions d'atmosphère du four de frittage 300, le matériau compressible peut commencer à se décomposer par oxydation à partir de 400°C avec une cinétique très lente, puis peut se décomposer par oxydation avec une cinétique plus rapide à partir d'une température comprise entre 600°C et 700°C, et enfin avec une cinétique très rapide à partir de 900°C. Un matériau compressible présentant de telles propriétés peut par exemple être du graphite expansé, comme décrit précédemment.

Le contact entre l'outillage de maintien 100 et la face interne 10b de la préforme 10 peut également être maintenu durant l'intégralité de l'étape de frittage.

De préférence, le matériau compressible est choisi de sorte à ne pas altérer la préforme fibreuse 10 ou la chambre 310 du four 300 lors de sa décomposition.

L'étape de déliantage peut être réalisée dans une installation différente de l'installation de frittage, le chargement comprenant la préforme fibreuse et le ou les outillages de maintien étant transporté à la fin de l'étape de déliantage dans une installation de frittage selon l'invention.

L'étape de frittage permet ainsi de former la matrice dans les porosités de la préforme fibreuse 10, afin d'obtenir la pièce en matériau composite souhaitée. L'installation et le procédé de l'invention sont particulièrement adaptés pour la réalisation de pièces destinées à constituer tout ou partie de pièces d'arrière-corps de moteur aéronautique, ou tout ou partie de chambres de combustion. De manière générale, la pièce de révolution en matériau composite peut présenter une section maximale de diamètre supérieur à 700 mm.

L'expression « compris(e) entre ... et ... » doit se comprendre comme incluant les bornes.

## Revendications

1. Installation de frittage de préforme de révolution comprenant un four de frittage (300) dans lequel est disposé un chargement, le chargement comprenant une préforme de révolution (10) disposée autour d'au moins un outillage de maintien (100), le ou les outillages de maintien (100) comprenant un disque (110), l'installation étant **caractérisée en ce que** le ou les outillages de maintien (100) comprennent en outre une couronne (120) présente sur la périphérie du disque (110), la couronne (120) étant réalisée en matériau compressible apte à être éliminé par oxydation thermique, une partie de la préforme (10) étant en contact avec la couronne (120) avant frittage.

2. Installation selon la revendication 1, dans laquelle le matériau compressible est du graphite expansé.

3. Installation selon la revendication 1 ou 2, dans laquelle le disque (110) est réalisé en céramique monolithique.

4. Installation selon l'une quelconque des revendications 1 à 3, dans laquelle au moins un outillage de maintien (100) est disposé à une extrémité de la préforme (10) selon son axe de révolution (X).

5. Installation selon l'une quelconque des revendications 1 à 4, dans laquelle la préforme de révolution (10) comprend des particules (51) de précurseurs de matrice dans ses porosités.

6. Procédé de fabrication d'une pièce de révolution en matériau composite comprenant les étapes suivantes :
- l'imprégnation d'une préforme fibreuse (10) de révolution au moins par des particules (51) d'un ou de plusieurs précurseurs de matrice,
- la placement de la préforme fibreuse (10) de révolution comprenant les particules (51) du ou des précurseurs de matrice autour d'au moins un outillage de maintien (100), le ou les outillages de maintien (100) comprenant un disque (110) et une couronne (120) présente sur la périphérie du disque (110), la couronne (120) étant réalisée en matériau compressible apte à être éliminé par oxydation thermique, une partie de la préforme (10) étant en contact avec la couronne (120),
- le frittage de la préforme fibreuse (10) comprenant les particules (51) de précurseurs de matrice afin de former une matrice dans les porosités de ladite préforme fibreuse (10) pour obtenir une pièce (1) en matériau composite, la majorité du matériau compressible de la couronne (120) étant décomposée par oxydation à la fin de l'étape de frittage,
- le retrait du ou des outillages de maintien (100) de la pièce (1) en matériau composite obtenue.

7. Procédé selon la revendication 6, dans lequel le matériau compressible est du graphite expansé.

8. Procédé selon la revendication 6 ou 7, dans lequel l'étape d'imprégnation de la préforme fibreuse (10) comprend également l'imprégnation de ladite préforme (10) par un liant, le procédé comprenant en outre une étape de déliantage de la préforme fibreuse (10) de révolution disposée autour de l'outillage de maintien (100) avant l'étape de frittage.

9. Procédé selon l'une quelconque des revendications 6 à 8, dans lequel un dispositif de mise en position et de centrage (200) est utilisé lors de l'étape de placement de la préforme fibreuse (10) autour du ou des outillages de maintien (100), le dispositif de mise en position (200) comprenant au moins une tige (220) et un support (240), l'extrémité de la préforme fibreuse (10) selon son axe de révolution (X) la plus éloignée de la partie de la préforme fibreuse (10) en contact avec l'outillage de maintien (100) reposant sur le support (240), ledit support (240) étant fixé à la tige (220) et le ou les outillages de maintien (100) étant fixés à la tige (220) par leur centre lors de l'étape de placement.

## Patentansprüche

1. Sinteranlage für Rotationsvorform, umfassend einen Sinterofen (300), in dem eine Beschickung angeordnet ist, wobei die Beschickung eine Rotationsvorform (10) umfasst, die um mindestens ein Haltewerkzeug (100) herum angeordnet ist, wobei das oder die Haltewerkzeuge (100) eine Scheibe (110) umfassen, wobei die Anlage **dadurch gekennzeichnet ist, dass** das oder die Haltewerkzeuge (100) ferner einen Kranz (120) umfassen, der an dem Umfang der Scheibe (110) vorhanden ist, wobei der Kranz (120) aus einem zusammendrückbaren Material besteht, das dazu geeignet ist, durch thermische Oxidation beseitigt zu werden, wobei ein Teil der Vorform (10) vor dem Sintern mit dem Kranz (120) in Kontakt ist.

2. Anlage nach Anspruch 1, wobei das zusammendrückbare Material expandierter Graphit ist.

3. Anlage nach Anspruch 1 oder 2, wobei die Scheibe (110) aus monolithischer Keramik besteht.

4. Anlage nach einem der Ansprüche 1 bis 3, wobei mindestens ein Haltewerkzeug (100) an einem Ende der Vorform (10) entlang ihrer Rotationsachse (X) angeordnet ist.

5. Anlage nach einem der Ansprüche 1 bis 4, wobei die Rotationsvorform (10) Matrixvorläuferpartikel (51) in ihren Porositäten umfasst.

6. Verfahren zur Herstellung eines Rotationsteils aus Verbundmaterial, das die folgenden Schritte umfasst:
- Imprägnieren der faserigen Rotationsvorform (10) zumindest durch Partikel (51) eines oder mehrerer Marixvorläufer,
- wobei das Platzieren der faserigen Rotationsvorform (10) die Partikel (51) des oder der Matrixvorläufer um mindestens ein Haltewerkzeug (100) herum umfasst, wobei das bzw. die Haltewerkzeuge (100) eine Scheibe (110) und einen Kranz (120) umfasst bzw. umfassen, der am Umfang der Scheibe (110) vorhanden ist, wobei der Kranz (120) aus zusammendrückbarem Material besteht, das dazu geeignet ist, durch thermische Oxidation beseitigt zu werden, wobei ein Teil der Vorform (10) mit dem Kranz (120) in Kontakt ist,
- das Sintern der faserigen Vorform (10) Partikel (51) aus Matrixvorläufern umfasst, um eine Matrix in den Porositäten der faserigen Vorform (10) zu bilden, um ein Teil (1) aus Verbundmaterial zu erhalten, wobei der Großteil des zusammendrückbaren Materials des Kranzes (120) am Ende des Schritts des Sinterns durch Oxidation abgebaut wird,
- Entfernen des oder der Haltewerkzeuge (100) des erhaltenen Teils (1) aus Verbundmaterial.

7. Verfahren nach Anspruch 6, wobei das zusammendrückbare Material expandierter Graphit ist.

8. Verfahren nach Anspruch 6 oder 7, wobei der Schritt des Imprägnierens der faserigen Vorform (10) auch das Imprägnieren der Vorform (10) mit einem Bindemittel umfasst, wobei das Verfahren ferner einen Schritt des Entbinderns der faserigen Rotationsvorform (10) umfasst, die vor dem Schritt des Sinterns um das Haltewerkzeug (100) herum angeordnet wird.

9. Verfahren nach einem der Ansprüche 6 bis 8, wobei eine Vorrichtung (200) zur Positionierung und Zentrierung beim Schritt des Platzierens der faserigen Vorform (10) um das oder die Haltewerkzeuge (100) herum verwendet wird, wobei die Positionierungsvorrichtung (200) mindestens eine Stange (220) und einen Träger (240) umfasst, wobei das Ende der faserigen Vorform (10), das entlang ihrer Rotationsachse (X) am weitesten von dem Teil der faserigen Vorform (10) entfernt ist, der mit dem Haltewerkzeug (100) in Kontakt ist, auf dem Träger (240) ruht, wobei der Träger (240) an der Stange (220) befestigt ist und das oder die Haltewerkzeuge (100) beim Schritt des Platzierens über ihre Mitte an der Stange (220) befestigt wird bzw. werden.

## Claims

1. An installation for sintering a revolution preform comprising a sintering furnace (300) wherein a load is disposed, the load comprising a revolution preform (10) disposed around at least one holding tool (100), the holding tool(s) (100) comprising a disk (110), the installation being **characterized in that** the holding tool(s) (100) further comprise a crown (120) present on the periphery of the disk (110), the crown (120) being made of compressible material capable of being eliminated by thermal oxidation, a portion of the preform (10) being in contact with the crown (120) before sintering.

2. The installation according to claim 1, wherein the compressible material is expanded graphite.

3. The installation according to claim 1 or 2, wherein the disk (110) is made of monolithic ceramic.

4. The installation according to any one of claims 1 to 3, wherein at least one holding tool (100) is disposed at one end of the preform (10) along its axis of revolution (X).

5. The installation according to any one of claims 1 to 4, wherein the revolution preform (10) comprises matrix precursor particles (51) in its porosities.

6. A method for manufacturing a composite material revolution part comprising the following steps:
- impregnating a fibrous preform (10) of revolution at least by particles (51) of one or more matrix precursors,
- placing the fibrous preform (10) of revolution comprising the matrix precursor particles (51) around at least one holding tool (100), the holding tool(s) (100) comprising a disk (110) and a crown (120) present on the periphery of the disk (110), the crown (120) being made of compressible material capable of being eliminated by thermal oxidation, a portion of the preform (10) being in contact with the crown (120),
- sintering the fibrous preform (10) comprising the matrix precursor particles (51) in order to form a matrix in the porosities of said fibrous preform (10) to obtain a composite material part (1), the majority of the compressible material of the crown (120) being decomposed by oxidation at the end of the sintering step,
- removing the holding tool(s) (100) from the composite material part (1) obtained.

7. The method according to claim 6, wherein the compressible material is expanded graphite.

8. The method according to claim 6 or 7, wherein the step of impregnating the fibrous preform (10) also comprises the impregnation of said preform (10) with a binder, the method further comprising a step of debinding the fibrous preform (10) of revolution disposed around the holding tool (100) before the sintering step.

9. The method according to any one of claims 6 to 8, wherein a positioning and centering device (200) is used during the step of placing the fiber preform (10) around the holding tool(s) (100), the positioning device (200) comprising at least one rod (220) and one support (240), the end of the fiber preform (10) along its axis of revolution (X) furthest from the portion of the fiber preform (10) in contact with the holding tool (100) resting on the support (240), said support (240) being fixed to the rod (220) and the holding tool(s) (100) being fixed to the rod (220) by their center during the placement step.
